# EUROPÄISCHE PATENTSCHRIFT

(11) **EP 0 937 665 B1**
(45) Veröffentlichungstag und Bekanntmachung des Hinweises auf die Patenterteilung: **19.12.2001**
(21) Anmeldenummer: 99102156.9
(22) Anmeldetag: 03.02.1999
(51) Int. Cl.: B65G 43/08, B65G 39/02

(54) **Rollenantriebseinheit mit Sensoren und einer Steuerlogik zum motorgetriebenen Anheben und Absenken der Antriebsrolle**
Roller-drive unit with sensors and control logic for motor-driven raising and lowering of the drive roller
Unité d'entraînement à rouleau avec capteurs et logique de commande pour le levage et l'abaissement motorisé du rouleau d'entrainement

(30) Priorität: 20.02.1998 DE 19807229
(43) Veröffentlichungstag der Anmeldung: 25.08.1999
(73) Patentinhaber: Telair International GmbH, 83734 Hausham (DE)
(72) Erfinder: Huber, Thomas, 82393 Iffeldorf (DE); Dürrwächter, Martin, 83737 Irschenberg (DE); Kieser, Benedikt, 83714 Miesbach (DE); Urch, Matthias, 85586 Poing (DE)
(74) Vertreter: Bohnenberger, Johannes, Dr.

(56) Entgegenhaltungen:
- EP-A- 0 497 045
- EP-A- 0 512 672
- EP-A- 0 769 450

## Beschreibung

Die Erfindung betrifft eine Rollenantriebseinheit nach dem Oberbegriff des Patentanspruches 1.

Ein bekanntes Ladesystem zum Beladen und Entladen des Frachtraums eines Flugzeuge weist eine Vielzahl von Rollenantriebseinheiten auf (siehe z.B. EP-A-0 497 045). Jede der Rollenantriebseinheiten ist mit einer Antriebsrolle versehen, die in einer angehobenen Arbeitsposition einen Container befördert. Die aus diesem Ladesystem bekannten Sensoren stellen jedoch lediglich die An- oder Abwesenheit eines Containers im Eingriffsbereich der betreffenden Antriebsrolle fest. Befindet sich kein Container über der Rollenantriebseinheit, so wird die Antriebsrolle in eine Ruheposition abgesenkt.

Wird eine angehobene Antriebswelle seitlich von einem Container angefahren, so kann es leicht zu einer Beschädigung der Rollenantriebseinheit kommen. Bereits eine einzige nicht mehr funktionstüchtige Rollenantriebseinheit in einem Ladesystem kann zu einer Störung im Ladebetrieb führen.

Daher beschäftigt sich die Erfindung mit der Aufgabe, die Betriebssicherheit einer Rollenantriebseinheit in einem Ladesystem zum Beladen und Entladen eines Frachtraums, insbesondere dem eines Flugzeugs, und damit letztendlich die Betriebssicherheit des Ladesystems zu erhöhen.

Diese Aufgabe wird durch die im Patentanspruch 1 angegebenen Maßnahmen gelöst. Bevorzugte Ausführungsformen der Erfindung sind in den Unteransprüchen angegeben.

Ein wesentlicher Punkt der Erfindung besteht darin, die weitgehend gegen harte mechanische Stöße durch die Frachtcontainer ungeschützten Antriebsrollen zu schützen. Dies geschieht erfindungsgemäß, indem insbesondere links und/oder rechts von der Antriebsrolle (in Bezug auf die Förderrichtung der Antriebsrolle) Sensoren angeordnet werden, die feststellen, wenn sich ein Container seitlich auf die Antriebsrolle zubewegt. Ggf. melden dies die Sensoren einer Steuerlogik, die eine schnelle Absenkung der Antriebsrolle in ihre geschützte Ruheposition und/oder eine Verschwenkung der Förderrichtung der Antriebsrolle in die Transportrichtung des sich der Rolle nähernden Containers veranlaßt.

Eine Erfassungseinrichtung erfaßt die von den Sensoren im Falle der Annäherung eines Containers abgegebenen spezifischen elektrischen Signale und leitet sie an eine mit der Erfassungseinrichtung verbundene Steuerlogik weiter. Die Steuerlogik ermittelt, in welcher zeitlichen Reihenfolge die Sensoren von dem Container passiert werden und gibt ein Auslösesignal ab, wenn ein Container sich den vor der Antriebsrolle befindlichen Sensoren unter einem ungünstigen Winkel oder von der Seite her nähert.

Gemäß einer vorteilhaften Ausgestaltung der Erfindung, ermittelt die Steuerlogik zudem, unter welchem Winkel - wiederum in Bezug auf die Förderrichtung der Antriebsrolle - sich ein Container der Rollenantriebseinheit bzw. der Antriebsrolle nähert. Würde der Container ohne Gegenmaßnahmen innerhalb eines vorgegebenen Winkelbereichs in schädlicher Weise auf die Antriebsrolle auftreffen, so wird dies von der Steuerlogik mit Hilfe der Sensoren rechtzeitig erkannt und die Steuerlogik gibt ein Auslösesignal ab, das vorzugsweise einen Elektromotor aktiviert, der die Antriebsrolle der Rollenantriebseinheit rechtzeitig aus dem Eingriffsbereich des Containers entfernt und in eine Ruheposition absenkt.

Alternativ oder ergänzend kann vorgesehen sein, daß das Auslösesignal der Steuerlogik einen Elektromotor und/oder einen anderen geeigneten Aktuator aktiviert, der die Antriebsrolle bzw. das die Antriebsrolle tragende Trägerelement der Rollenantriebseinheit derart verschwenkt, daß die Ausrichtung der Förderrichtung der Antriebsrolle weitgehend mit dem Winkel übereinstimmt, unter dem sich der Container der Rollenantriebseinheit nähert.

Die geeignet positionierten Sensoren bzw. die Steuerlogik erkennt zudem, ob sich ein Container über der Rollenantriebseinheit befindet oder nicht, bzw. aus welcher Richtung sich der Container auf die Rollenantriebseinheit zubewegt. Hierdurch ist ein seitliches Anfahren der Rollenantriebseinheit ausgeschlossen. Werden die beiden seitlich zur Antriebsrolle liegenden Sensoren gleichzeitig überfahren, darf die Antriebsrolle aufgerichtet und angetrieben werden bzw. oben bleiben und weiter antreiben. Wird nur einer dieser Sensoren überfahren, bleibt die Antriebsrolle unten. Werden die vor und hinter der Rolle liegenden Sensoren nacheinander überfahren, muß die Antriebsrolle mit hoher Geschwindigkeit absenken bzw. sie darf erst gar nicht in eine Arbeitsposition angehoben werden. Vorzugsweise wird die Antriebsrolle in ihre Ruheposition abgesenkt, sobald die Sensoren keinen Container mehr registrieren.

Bei den eingesetzten Sensoren handelt es sich vorzugsweise um optische Sensoren, wie z.B. Reflexionslichtschranken.

Weitere erfinderische Merkmale ergeben sich aus der nachfolgenden Beschreibung einer bevorzugten Ausführungsform der Erfindung, die anhand einer Abbildung näher erläutert wird. Es zeigt:
- Fig. 1: eine schematisierte Darstellung einer erfindungsgemäßen Rollenantriebseinheit mit optischen Sensoren in einem Teilschnitt;
- Fig. 2: eine Draufsicht auf die Rollenantriebseinheit nach Fig. 1; und
- Fig. 3: ein Getriebe 30 mit zwei Antriebssträngen.

In der nachfolgenden Beschreibung werden für gleiche und gleichwirkende Teile dieselben Bezugsziffern verwendet.

Die hier gezeigte Rollenantriebseinheit ist um ihre vertikale Achse schwenkbar, so daß die Förderrichtung eingestellt werden kann. Es sei aber betont, daß die vorliegende Erfindung sich auch auf solche Rollenantriebseinheiten bezieht, bei denen die Antriebsrolle nur in ihrer Höhe verschwenkbar, nicht aber in ihrer Richtung drehbar ist.

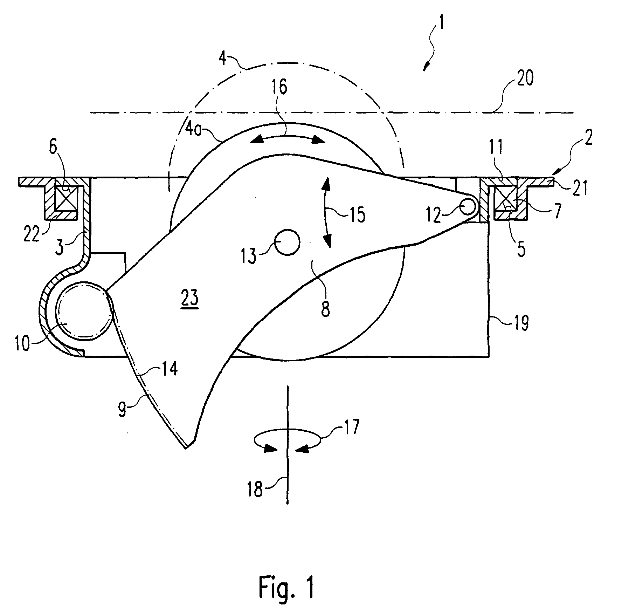

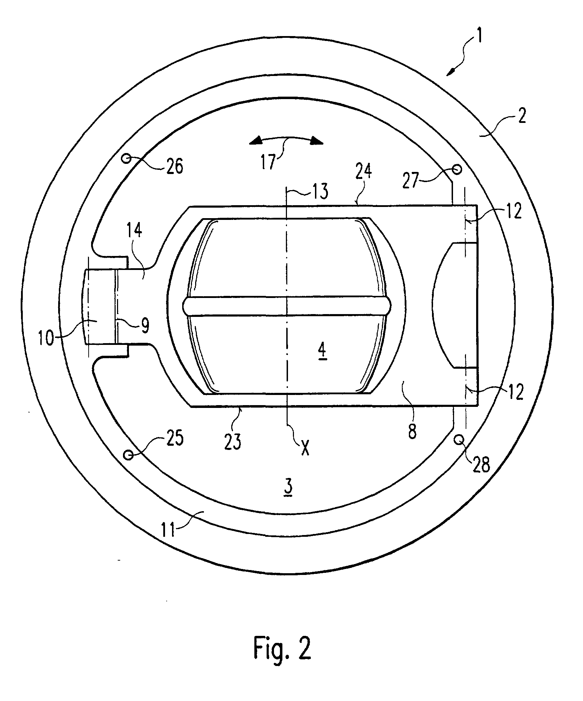

Die in den Figuren 1 und 2 dargestellte erfindungsgemäße Rollenantriebseinheit 1, bei der der Übersichtlichkeit halber eine an sich vorgesehene Abdeckung der Rollenantriebseinheit weggelassen worden ist, umfaßt ein ringförmiges Befestigungselement 2, ein Trägerelement 3 und eine Antriebsrolle 4 bzw. 4a.

Das ringförmige Befestigungselement 2 weist einen äußeren Kragen 21 auf, mit dessen Hilfe sich das Befestigungselement bzw. die Rollenantriebseinheit 1 einfach in einem Frachtraum, z.B. dem eines Flugzeuges, vorzugsweise in einer Öffnung im Boden des Frachtraums, montieren läßt. In das vorzugsweise ringförmige Befestigungselement 2 ist das Trägerelement 3, vorzugsweise oben bündig, eingebracht. Hierzu ist das Befestigungselement 2 mit einem inneren Kragen 22 versehen, der eine Auflagefläche 5 für das eingebrachte Trägerelement 3 bildet. Das Trägerelement 3, das vorzugsweise einen zylindrischen Hohlkörper 19 aufweist, ist seinerseits mit einem Flansch 11 versehen, dessen Unterseite eine Haltefläche 6 bildet, die, vorzugsweise über ein ringförmiges Rollen- oder Wälzlager 7, auf dem inneren Kragen 22 des Befestigungselements 2 aufliegt. Dementsprechend läßt sich das Trägerelement 3 um eine vertikale Achse 18, um einen Winkel im Bereich von 0 bis 180 Grad oder im Bereich von 0 bis 90 Grad, in die gewünschte Förderrichtung des Frachtcontainers schwenken.

Hierzu weist das Trägerelement 3, vorzugsweise an oder in seinem weitgehend zylindrischen Hohlkörper 19, ein Zahnradsegment (nicht dargestellt) auf. Das Trägerelement 3 wird vorzugsweise von einem ersten Abtriebsstrang eines Planetengetriebes (nicht dargestellt) - wie vorstehend erläutert - steuerbar angetrieben, wobei das Schwenken sowohl bei abgesenkter (Ruheposition) Antriebsrolle 4a als auch aufgestellter (Arbeitsposition) Antriebsrolle 4 möglich ist. Im verschwenkbaren Trägerelement 3 ist eine nach oben und unten verschwenkbare Schwenkhalterung 8 vorgesehen, was durch den Doppelpfeil mit dem Bezugszeichen 15 in Fig. 1 angedeutet ist. An ihrem einen Ende ist die Schwenkhalterung 8 am Trägerelement 3 angelenkt, wie durch das Bezugszeichen 12 in den Figuren 1 und 2 angegeben. An ihrem anderen, nach oben und unten verschwenkbaren Ende 14, ist die Schwenkhalterung 8 mit einem Zahnradsegment 9 versehen. Das Zahnradsegment 9 kämmt mit einem ebenfalls im oder am Trägerelement und/oder an der Schwenkhalterung 8 drehbeweglich angeordneten Ritzel 10, das vorzugsweise vom zweiten Abtriebsstrang des Planetengetriebes (nicht dargestellt) - wie vorstehend erläutert - steuerbar angetrieben wird und bei seinem Antrieb, in Abhängigkeit von der Drehrichtung des Ritzels 10, die Schwenkhalterung 8 über das Zahnradsegment 9 nach oben in eine von mehreren Arbeitspositionen der Antriebsrolle 4 oder nach unten in die einzige Ruheposition der Antriebsrolle 4a bringt. Soll der Andruck der Antriebsrolle gegen den Boden eines auf der Transportebene 20 über der Antriebsrolle 4 befindlichen Containers erhöht werden, so wird die Antriebsrolle 4 über das Antriebsritzel 10, das Zahnradsegment 9 und die Schwenkhalterung 8 von einer ersten, tiefer gelegenen Arbeitsposition oberhalb der Transportebene 20 in eine zweite höher gelegene Arbeitsposition oberhalb der Transportebene 20 gebracht.

Die Schwenkhalterung 8 weist zwei gegenüberliegende, nierenförmige Wangenflächen 23 und 24 auf, die an ihrem ersten, am Trägerelement 3 angelenkten Ende und an ihrem jeweils ein Zahnradsegment 9 aufweisenden zweiten Ende über Stege miteinander verbunden sind, so daß eine Aussparung zur, vorzugsweise mittigen, Aufnahme der Antriebsrolle 4 entsteht. Quer zur Schwenkachse der Schwenkhalterung 8 ist eine Achse oder Welle (nicht dargestellt) zwischen den beiden Wangenflächen 23 und 24 angeordnet, die die Antriebsrolle 4 (gelagert) trägt, so daß diese von einem Motor (nicht dargestellt) - wie vorstehend erläutert - sich vorwärts bzw. rückwärts um die Drehachse 13 drehend angetrieben werden kann.
Weiterhin sind im Flansch 11 rings um die Antriebsrolle 4 verteilt Sensoren (Reflexionslichtschranken) 25-28 verteilt angeordnet. Die Verteilung erfolgt hierbei symmetrisch zur Drehachse X derart, daß ein Container, der in Fig. 2 von links also senkrecht zur Drehachse X der Antriebsrolle 4 ankommt, die Sensoren 25 und 26 im wesentlich gleichzeitig abdeckt. Kommt er von rechts, so deckt er die Sensoren 27 und 28 gleichzeitig ab. In beiden Fällen kann somit die Antriebsrolle dann, wenn der Container über der Rollenantriebseinheit steht (alle 4 Sensoren sind abgedeckt) hochgefahren werden und in einer Richtung angetrieben werden, die durch die Reihenfolge des Überfahrens der linken Sensoren (25, 26) bzw. der rechten Sensoren (27, 28) vorgegeben ist. Werden die Sensoren 26 und 27 im wesentlichen gleichzeitig überfahren, so kommt der Container in einer Richtung entsprechend der Drehachse X der Antriebsrolle 4. Gleiches gilt natürlich auch für die (in Fig. 2 unten liegenden) Sensoren 25 und 28. In diesem Fall darf die Antriebsrolle 4 nicht angehoben werden bzw. muß, falls sie sich im angehobenen Zustand befindet, schnell abgesenkt werden. Es ist leicht ersichtlich, daß aus der zeitlichen Reihenfolge des Überfahrens der Sensoren 25-28 der exakte Anfahrwinkel herleitbar ist. Dadurch kann die Antriebsrolle 4 bzw. kann das Trägerelement 3 derart verschwenkt (Pfeil 17 in Fig. 2) werden, daß die Container-Bewegungsrichtung mit der Laufrichtung der Antriebsrolle 4 bzw. der Normalen zur Drehachse X übereinstimmt.

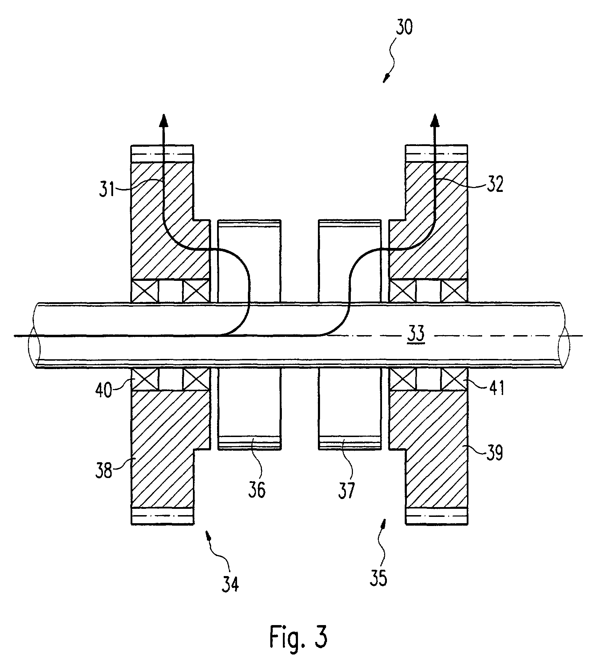

Anstelle eines Planetengetriebes kann beispielsweise auch ein anderes Getriebe mit zwei Antriebssträngen verwendet werden. Ein Beispiel hierfür ist das in Fig. 3 dargestellte Getriebe 30, das einen ersten Antriebsstrang 31 und einen zweiten Antriebsstrang 32 aufweist. Auf einer (gegebenenfalls verlängerten) Motorwelle 33 eines Elektromotors (nicht dargestellt) sind zwei Antriebseinheiten 34 und 35 angeordnet, die unabhängig voneinander drehbeweglich sind. Die erste Antriebseinheit 34 umfaßt ein Antriebsritzel 38, ein Drehlager 40 und eine Kupplung 36, wobei das Antriebsritzel 38 und die Kupplung 36 über das Drehlager 40 auf der Motorwelle 33 drehbeweglich gelagert sind. Ebenso weist die zweite Antriebseinheit 35 ein Antriebsritzel 39, ein Drehlager 40 und eine Kupplung 37 auf, wobei das Antriebsritzel 39 und die Kupplung 37 über das Drehlager 40 auf der Motorwelle 33 drehbar gelagert sind. Durch Betätigung der Kupplung 36 und/oder 37 kann wahlweise eine kraftschlüssige Verbindung zwischen der Motorwelle 33 und und dem Antriebsstrang 31 und/oder dem zweiten Antriebsstrang 32 hergestellt werden. Wird ein solches Getriebe beispielsweise zum Betrieb der beschriebenen Rollenantriebseinheit benutzt, so kann beispielsweise der Antriebsstrang 31 zum steuerbaren Antrieb des Trägerelements 3 und der Antriebsstrang 32 zum steuerbaren Antrieb des Ritzels 10 verwendet werden.

Es versteht sich, daß anstelle von nierenförmigen Wangenflächen 23 und 24 auch Wangenflächen verwendet werden können, die eine (gleichwirkende) andere Form haben.

Aus obigem geht hervor, daß sich die Erfindung nicht nur auf eine Rollenantriebseinheit sondern auch auf ein Verfahren zum Anheben und Absenken der Antriebsrolle einer Rollenantriebseinheit in Abhängigkeit von Bewegungssignalen betrifft, welche die Bewegung eines Frachtcontainers anzeigen.

### Bezugszeichenliste

- 1: Rollenantriebseinheit
- 2: ringförmiges Befestigungselement
- 3: verschwenkbares Trägerelement der Antriebsrolle
- 4: Antriebsrolle in aufgestellter Arbeitsposition
- 4a: Antriebsrolle in abgesenkter Ruheposition
- 5: Auflagefläche des Befestigungselements 2
- 6: Haltefläche des Trägerelements 3
- 7: ringförmiges Wälzlager
- 8: nach oben und unten verschwenkbare Schwenkhalterung
- 9: Zahnradsegment der Schwenkhalterung
- 10: Antriebsritzel zum Aufstellen der Antriebsrolle 4
- 11: Flansch des Trägerelements 3
- 12: Bezugszeichen, das die einseitige Anlenkung der Schwenkhalterung 8 am Trägerelement 3 zeigt
- 13: Drehachse der in der Schwenkhalterung 8 befestigten Antriebsrolle 4
- 14: verschwenkbares Ende der Schwenkhalterung, das mit mindestens einem Zahnradsegment 9 versehen ist
- 15: Doppelpfeil, der die Bewegung der Antriebsrolle von der Ruheposition in die Arbeitsposition und umgekehrt andeutet
- 16: Doppelpfeil, der die beiden Drehrichtungen der Antriebsrolle 4 zur Beförderung von Frachtgut andeutet
- 17: Doppelpfeil, der die Schwenkbewegung des um eine vertikale Achse 18 verschwenkbaren Trägerelements 3 und damit der Antriebsrolle 4 andeutet
- 18: Schwenkachse des Trägerelements 3
- 19: zylindrischer Hohlkörper des Trägerelements 3
- 20: Transportebene
- 21: äußerer Kragen des ringförmigen Befestigungselements 2
- 22: innerer Kragen des ringförmigen Befestigungselements 2
- 23: erste nierenförmige Wangenfläche der Schwenkhalterung 8
- 24: zweite nierenförmige Wangenfläche der Schwenkhalterung 8
- 25-28: Sensoren
- 30: Getriebe
- 31: Antriebsstrang
- 32: Antriebsstrang
- 33: Motorwelle
- 34: Antriebseinheit
- 35: Antriebseinheit
- 36: Kupplung
- 37: Kupplung
- 38: Antriebsritzel
- 39: Antriebsritzel
- 40: Drehlager
- 41: Drehlager

## Patentansprüche

1. Rollenantriebseinheit mit einer insbesondere durch einen Elektromotor absenk- und anhebbaren Antriebsrolle (4) zum Transport von Frachtcontainern im Laderaum eines Flugzeugs, **dadurch gekennzeichnet, daß**
die Rollenantriebseinheit Sensoren (25-28) aufweist, die derart rings um die Antriebsrolle (4) verteilt angeordnet sind, daß die Bewegungsrichtung eines auf die Rollenantriebseinheit zukommenden Frachtcontainers feststellbar ist und
daß eine Steuerungseinrichtung derart vorgesehen und mit den Sensoren (25-28) sowie mit dem Elektromotor verbunden ist, daß die Antriebsrolle (4) entsprechend den Signalen der Sensoren (25-28) aus einer unteren Ruhestellung in eine obere Antriebsstellung oder umgekehrt verschwenkbar ist.

2. Rollenantriebseinheit nach Anspruch 1,
**dadurch gekennzeichnet, daß**
die Sensoren (25-28) in einer derartigen räumlichen Entfernung von der Antriebsrolle (4) angeordnet sind,
daß bei der höchsten zu erwartenden Geschwindigkeit eines Frachtcontainers ein Absenken der Antriebsrolle von ihrer Arbeitsposition in die Ruheposition und somit ein Vermeiden eines Kontaktes zwischen dem Frachtcontainer und der Antriebsrolle (4) sicher verhinderbar ist.

3. Rollenantriebseinheit nach einem der vorhergehenden Ansprüche, **dadurch gekennzeichnet, daß**
die Sensoren (25-28) symmetrisch zu einer Drehachse (X) der Antriebsrolle (4) verteilt angeordnet sind.

4. Rollenantriebseinheit nach einem der vorhergehenden Ansprüche, **dadurch gekennzeichnet, daß**
die Antriebsrolle (4) um eine vertikale Achse zur Veränderung der Förderrichtung drehbar ist und
daß die Steuerung derart ausgebildet ist, daß die Antriebsrolle (4) entsprechend der von den Sensoren (25-28) festgestellten Bewegungsrichtung eines Frachtcontainers in Förderrichtung verdreht wird.

## Claims

1. A roller drive unit with a driving roller (4) lowerable and raisable in particular by an electric motor, for transporting freight containers in the cargo hold of an aeroplane, characterised in that the roller drive unit has sensors (25-28) which are arranged distributed all round the driving roller (4) in such a way that the direction of movement of a freight container approaching the roller drive unit can be determined, and
in that a control device is provided and connected to the sensors (25-28) and to the electric motor in such a way that the driving roller (4) is swingable in correspondence with the signals of the sensors (25-28) from a lower idle position into a higher driving position or vice versa.

2. A roller drive unit in accordance with Claim 1,
**characterised in that** the sensors (25-28) are arranged at such a spatial distance from the driving roller (4) that, at the maximum anticipated speed of a freight container, lowering of the driving roller from its operating position into the idle position and thus avoidance of contact between the freight container and the driving roller (4) is reliably achievable.

3. A roller drive unit according to one of the preceding claims, **characterised in that** the sensors (25-28) are arranged distributed symmetrically to an axis of rotation (X) of the driving roller (4).

4. A roller drive unit according to one of the preceding claims, **characterised in that** the driving roller (4) is rotatable about a vertical axis to change the direction of conveyance and **in that** the steering unit is constructed in such a way that the driving roller (4) is rotated in the direction of conveyance in accordance with the direction of movement determined by the sensors (25-28).

## Revendications

1. Unité d'entraînement à rouleau comportant un rouleau d'entraînement (4) qui peut être relevé et abaissé en particulier par un moteur électrique, pour le transport de conteneurs à marchandises dans la soute d'un avion, **caractérisée en ce que** l'unité d'entraînement à rouleau comporte des capteurs (25 à 28) qui sont répartis en anneau autour du rouleau d'entraînement (4) de manière que le sens de déplacement d'un conteneur à marchandises arrivant sur l'unité d'entraînement à rouleau puisse être constaté et **en ce qu'**il est prévu un dispositif de commande, relié aux capteurs (25 à 28) ainsi qu'au moteur électrique, de manière que le rouleau d'entraînement (4) puisse pivoter, suivant les signaux des capteurs (25 à 28), depuis une position de repos inférieure dans une position d'entraînement supérieure ou inversement.

2. Unité d'entraînement à rouleau selon la revendication 1, **caractérisée en ce que** les capteurs (25 à 28) sont disposés à une distance spatiale du rouleau d'entraînement (4) telle qu'à la plus grande vitesse probable d'un conteneur à marchandises, on puisse empêcher en toute certitude un abaissement du rouleau d'entraînement de sa position de travail dans la position de repos, et donc un contact entre le conteneur à marchandises et le rouleau d'entraînement (4).

3. Unité d'entraînement à rouleau selon l'une des revendications précédentes, **caractérisée en ce que** les capteurs (25 à 28) sont répartis symétriquement par rapport à un axe de rotation (X) du rouleau d'entraînement (4).

4. Unité d'entraînement à rouleau selon l'une des revendications précédentes, **caractérisée en ce que** le rouleau d'entraînement (4) peut tourner autour d'un axe vertical pour changer le sens de transport et **en ce que** la commande est conçue de manière que le rouleau d'entraînement (4) tourne dans le sens de transport, suivant le sens de déplacement d'un conteneur à marchandises, constaté par les capteurs (25 à 28).
